# EUROPÄISCHE PATENTSCHRIFT

(11) **EP 3 792 610 B1**
(45) Veröffentlichungstag und Bekanntmachung des Hinweises auf die Patenterteilung: **18.03.2026**
(21) Anmeldenummer: 20185658.0
(22) Anmeldetag: 14.07.2020
(51) Int. Cl.: G01M 1/04

(54) **WUCHTADAPTER FÜR EINE WUCHTVORRICHTUNG**
BALANCING ADAPTER FOR A BALANCING DEVICE
ADAPTATEUR D'ÉQUILIBRAGE POUR UN DISPOSITIF D'ÉQUILIBRAGE

(30) Priorität: 11.09.2019 DE 102019124418
(43) Veröffentlichungstag der Anmeldung: 17.03.2021
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- US-A1- 2011 233 839
- US-A1- 2014 117 630
- US-A1- 2015 123 356
- US-A1- 2016 008 894

## Beschreibung

Die Erfindung betrifft einen Wuchtadapter für eine Wuchtvorrichtung nach dem Oberbegriff des Patentanspruchs 1, eine Wuchtvorrichtung mit dem Wuchtadapter nach Patentanspruch 14 sowie ein Wuchtadapter-Set nach Patentanspruch 15.

Es sind Wuchtvorrichtungen bekannt, bei denen die Wuchtvorrichtung eine ortsfeste bzw. stationäre Basisstation aufweist, an der austauschbare Wuchtadapter angebracht werden können. Die Wuchtadapter können dabei üblicherweise an einer, eine Wuchtadapter-Aufnahme aufweisenden Antriebsspindel der Basisstation befestigt werden, die Bestandteil einer Antriebseinrichtung der Basisstation zum Drehantrieb des Wuchtadapters ist. Mittels der mit der Basisstation verbundenen Wuchtadapter können auszuwuchtende Werkstücke, wie beispielsweise Fräswerkzeuge, Werkzeugaufnahmen oder Riemenscheiben, aufgenommen bzw. eingespannt werden. Im eingespannten Zustand können die Werkstücke dann mittels der Wuchtvorrichtung ausgewuchtet werden.

Die austauschbaren Wuchtadapter unterscheiden sich in erster Linie dadurch voneinander, dass diese unterschiedliche Spannsysteme und Spannmaße bzw. Spanndurchmesser für die Einspannung von Werkstücken aufweisen. Mittels jedes Wuchtadapters kann daher eine bestimmte Art von Werkstücken eingespannt werden. Beispielsweise werden Fräswerkzeuge und Werkzeugaufnahmen üblicherweise mittels eines Wuchtadapters eingespannt, der eine Einspannung eines Werkstücks von außen ermöglicht. Bestimmte Riemenscheiben oder Schleifscheiben mit einer zentral angeordneten, zylinderförmigen Ausnehmung werden hingegen mittels eines Wuchtadapters eingespannt, der eine Einspannung eines Werkstücks von innen ermöglicht. Mittels der austauschbaren Wuchtadapter wird insgesamt eine besonders einfache Anpassung der Wuchtvorrichtung an unterschiedliche einzuspannende Werkstücke ermöglicht, wodurch die Wuchtvorrichtung besonders flexibel ist.

Aus der DE 10 2007 036 144 A1 ist ein Wuchtadapter für eine Wuchtvorrichtung bekannt, der einen Grundkörper bzw. Basiskörper und einen mit dem Grundkörper lösbar verbindbaren Wechselkörper aufweist. In einer konkreten Ausgestaltung kann der Wechselkörper eine Spanneinrichtung zur Einspannung eines Werkstücks aufweisen, die über ein Spannhülsenelement mit einer Spannhülse und ein relativ zu dem Spannhülsenelement verlagerbares Spannelement umfasst. Die Spannhülse weist einen Konus und das Spannelement einen zu dem Spannhülsen-Konus korrespondierenden Gegenkonus auf. Durch Verlagerung des Spannelements relativ zu dem Spannhülsenelement kann der Spanndurchmesser der Spannhülse unter Wirkung der Konusse verstellt und somit ein Werkstück eingespannt werden. Die Austauschbarkeit des Wechselkörpers ermöglicht hier eine Anpassung des Wuchtadapters an unterschiedliche einzuspannende Werkstücke. Ein weiteres für die Erfindung relevantes Dokument zum Stand der Technik ist das Patentdokument US 2015/123356 A1.

Im verbundenen Zustand sind der Grundkörper und der Wechselkörper hier zudem durch Wälzkörper koaxial zueinander gehalten und in radialer Richtung gegeneinander verspannt. Dabei ist jeder der Wälzkörper in einem Spalt zwischen dem Grundkörper und dem Wechselkörper angeordnet, der derart als Keilspalt ausgebildet und auf den jeweiligen Wälzkörper abgestimmt ist, dass der jeweilige Wälzkörper im Zuge des Miteinanderverbindens von Grundkörper und Wechselkörper so den Keilspalt entlang, tiefer in den Keilspalt hinein bewegt werden kann, dass die gewünschte Verspannung in radialer Richtung erfolgt. Eine derartige Verbindung von Grundkörper und Wechselkörper ist relativ aufwendig.

Aufgabe der Erfindung ist es, einen Wuchtadapter für eine Wuchtvorrichtung bereitzustellen, bei dem mit einem besonders einfachen und funktionssicheren Wuchtadapter-Aufbau eine einfache Anpassung an unterschiedliche einzuspannende Werkstücke ermöglicht wird. Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Wuchtadapter für eine Wuchtvorrichtung vorgeschlagen, mit einer Spanneinrichtung zum Einspannen eines Werkstücks, wobei die Spanneinrichtung ein Spannhülsenelement mit einer Spannhülse und ein relativ zu dem Spannhülsenelement verlagerbares, insbesondere stabförmiges, Spannelement aufweist. Dabei weist die Spannhülse einen Konus und das Spannelement einen zu dem Spannhülsen-Konus korrespondierenden Gegenkonus auf. Durch Verlagerung des Spannelements relativ zu dem Spannhülsenelement kann der Spanndurchmesser der Spannhülse, insbesondere unter Wirkung der Konusse, verstellt und somit ein Werkstück eingespannt werden. Zudem kann das, insbesondere als Wechselteil ausgebildete, Spannhülsenelement lösbar mit einem Basiskörper des Wuchtadapters verbunden werden. Erfindungsgemäß weist das Spannhülsenelement zur Verbindung mit dem Basiskörper einen Ringflansch auf, mit dem das Spannhülsenelement im verbundenen Zustand von Spannhülsenelement und Basiskörper, insbesondere in einer flächigen Anlage, auf einer, insbesondere äußeren und/oder ringförmigen, Stirnwand des Basiskörpers aufliegt.

Auf diese Weise weist der Wuchtadapter einen besonders einfachen und funktionssicheren Aufbau auf, da das Spannhülsenelement nun im verbundenen Zustand von Spannhülsenelement und Basiskörper in einem stabilen Sitz auf der Stirnwand des Basiskörper aufliegt. Durch diese Auflage des Spannhülsenelements wird eine besonders robuste Anbindung des Spannhülsenelements an dem Basiskörper mit einer geringen Schadensanfälligkeit möglich. Zudem kann das Spannhülsenelement dadurch auch besonders einfach bzw. mit geringem Kraftaufwand mit dem Basiskörper verbunden und von dem Basiskörper gelöst werden, wodurch das Spannhülsenelement einfach gewechselt und der Wuchtadapter an unterschiedliche einzuspannende bzw. auszuwuchtende Werkstücke angepasst werden kann.

In einer bevorzugten Ausgestaltung des erfindungsgemäßen Wuchtadapters kann das Spannhülsenelement mittels wenigstens eines, insbesondere dem Ringflansch zugeordneten, Verbindungselements, insbesondere mittels mehrerer Verbindungsschrauben, lösbar mit dem Basiskörper verbunden werden. So können das Spannhülsenelement und der Basiskörper einfach und zuverlässig miteinander verbunden werden. Bevorzugt weist der Ringflansch dabei mehrere durchgängigen Ausnehmungen, insbesondere Bohrungen, auf, durch die die Verbindungsschrauben geführt sind. Die Ausnehmungen können dabei in Umfangsrichtung gleichmäßig über den Ringflansch verteilt angeordnet sein. Vorzugsweise sind die Verbindungsschrauben in korrespondierende Gewindebohrungen des Basiskörpers, insbesondere in korrespondierende Gewindebohrungen eines Gehäuseteils des Basiskörpers, eingeschraubt.

Alternativ zu den Verbindungsschrauben wäre es beispielsweise auch möglich, das Spannhülsenelement und das Gehäuseteil mittels an dem Ringflansch und/oder dem Basiskörper angebrachter magnetischer Verbindungselemente oder Rastelemente als Verbindungselemente lösbar miteinander zu verbinden.

Bevorzugt weist das Spannhülsenelement eine, insbesondere durchgängige, Ausnehmung auf, in der das stabförmige Spannelement teilweise oder vollständig aufgenommen ist, wobei durch die Ausnehmung der Spannhülsen-Konus als Innenkonus ausgebildet ist. So kann ein Werkstück einfach und effektiv eingespannt werden. Zweckmäßig kann das Spannelement einen zylinderförmigen Abschnitt aufweisen, mit dem das Spannelement, insbesondere unter Zwischenlage eines Führungselements, linear verlagerbar in der Ausnehmung geführt ist.

Bevorzugt weist das Spannhülsenelement eine Zentriereinrichtung zur Zentrierung des, insbesondere im Wesentlichen rotationssymmetrischen, Spannhülsenelements relativ zu dem Basiskörper auf. So wird effektiv sichergestellt, dass sich das mit dem Basiskörper verbundene Spannhülsenelement stets in der gewünschten Position bzw. Ausrichtung relativ zu dem Basiskörper befindet.

Für eine funktionssichere Zentrierung kann das Spannhülsenelement als Zentriereinrichtung einen in einen Innenraum des Basiskörpers einragenden, an einer Innenwand des Basiskörpers, insbesondere flächig, anliegenden Zentriersteg aufweisen. Zweckmäßig kann der Zentriersteg dabei zylinderförmig, insbesondere kreiszylinderförmig, ausgebildet sein.

In einer bevorzugten konkreten Ausgestaltung kann das Spannhülsenelement und/oder ein mit dem Spannhülsenelement verbundenes hülsenförmiges Gehäuseteil des Basiskörpers im Wesentlichen rotationssymmetrisch ausgebildet sein.

Für eine effektive Einspannung eines Werkstücks kann das Spannhülsenelement eine die Spannhülse außenseitig umgebende Ablagefläche für ein einzuspannendes Werkstück und/oder für ein, insbesondere scheibenförmiges, Adapterelement aufweisen, wobei ein auf der Ablagefläche oder dem Adapterelement abgelegtes Werkstück mittels der Spanneinrichtung, insbesondere von innen, eingespannt werden kann.

Zweckmäßig kann das stabförmige Spannelement an einem Endbereich lösbar mit einem, insbesondere stabförmigen, Betätigungselement des Wuchtadapters zur Verlagerung des Spannelements relativ zu dem Spannhülsenelement verbunden sein.

Bevorzugt ist das Spannelement an dem Endbereich mit dem Betätigungselement verschraubbar, um eine einfache und schnelle Verbindung von Spannelement und Betätigungselement zu ermöglichen. Zur Realisierung dieser Schraubverbindung zwischen Spannelement und Betätigungselement kann das Spannelement an dem Endbereich mehrere voneinander beabstandete, insbesondere wendelförmig, über einen Teilumfang des Spannelements verlaufende Rillen aufweisen, in die dem Betätigungselement zugeordnete Eingriffselemente, insbesondere Kugeln, eingeführt werden können.

In einer bevorzugten konkreten Ausgestaltung kann das stabförmige Spannelement mehrteilig ausgebildet sein, wobei das Spannelement ein stabförmiges Basisteil und ein mit dem Basisteil verbundenes, das Basisteil ringförmig umgreifendes, insbesondere hülsenförmiges, Verbindungsteil zur Verbindung des Spannelements mit dem Betätigungselement aufweist.

Bevorzugt bilden das Spannhülsenelement und das Spannelement eine Wechsel-Baueinheit aus, die lösbar mit dem Basiskörper des Wuchtadapters verbunden werden kann. So können das Spannhülsenelement und das Spannelement besonders einfach mit dem Basiskörper verbunden werden.

Bevorzugt weist der Wuchtadapter einen Teil einer, insbesondere pneumatisch betriebenen, Antriebseinrichtung zur linearen Verlagerung des Spannelements relativ zu dem Spannhülsenelement auf. Konkret kann der Wuchtadapter dabei einen mittelbar, insbesondere über ein stabförmiges Betätigungselement, oder unmittelbar mit dem Spannelement gekoppelten Kolben einer Zylinder-Kolben-Einheit als Antriebseinrichtung aufweisen.

In einer bevorzugten konkreten Ausgestaltung weist der Basiskörper ein, insbesondere hülsenförmiges, die Stirnwand umfassendes Gehäuseteil und eine, insbesondere mittels mehrerer Verbindungsschrauben, mit dem Gehäuseteil verbundene, das Betätigungselement und den Teil der Antriebseinrichtung aufweisende Betätigungs-Baueinheit auf.

In einer weiteren Ausgestaltung kann die Spannhülse zur Verstellung des Spanndurchmessers mit über den Hülsenumfang verteilten, insbesondere in Radialrichtung durchgängigen, Schlitzen versehen sein. Mittels derartiger Schlitze kann der Spanndurchmesser der Spannhülse einfach und effektiv in dem gewünschten Maß verstellt werden. Bevorzugt ist dabei vorgesehen, dass die Spannhülse an einem freien Endbereich über den gesamten Hülsenumfang geschlossen ausgebildet ist. So wird eine besonders einfache Einspannung eines Bauteils von innen ermöglicht.

Ferner wird auch eine Wuchtvorrichtung mit dem erfindungsgemäßen Wuchtadapter beansprucht.

Die sich durch die erfindungsgemäße Wuchtvorrichtung ergebenden Vorteile sind identisch mit den bereits gewürdigten Vorteilen des erfindungsgemäßen Wuchtadapters, so dass diese an dieser Stelle nicht wiederholt werden.

Zweckmäßig kann die Wuchtvorrichtung eine Basisstation mit einer Wuchtadapter-Aufnahme zur Aufnahme des Wuchtadapters aufweisen. Bevorzugt weist die Basisstation dabei eine Dreh-Antriebseinrichtung zum Drehantrieb des aufgenommenen Wuchtadapters und/oder zumindest einen Teil einer Antriebseinrichtung zur, insbesondere linearen, Verlagerung des Spannelements relativ zu dem Spannhülsenelement auf.

Des Weiteren wird auch ein Wuchtadapter-Set beansprucht, mit mehreren Spannhülsenelementen, wenigstens einem, insbesondere mehreren, zu den Spannhülsenelementen korrespondierenden, insbesondere stabförmigen, Spannelement und einem Basiskörper, wobei jedes Spannhülsenelement eine Spannhülse aufweist und sich die einzelnen Spannhülsenelemente zumindest in der Ausgestaltung ihrer Spannhülsen, insbesondere im Außendurchmesser ihrer Spannhülsen, unterscheiden, wobei die Spannhülse jedes Spannhülsenelements einen Konus und das wenigstens eine Spannelement einen zu dem Spannhülsen-Konus korrespondierenden Gegenkonus aufweist, und wobei jedes Spannhülsenelement lösbar mit dem Basiskörper verbindbar ist, wobei jedes Spannhülsenelement zur Verbindung mit dem Basiskörper einen Ringflansch aufweist, mit dem das Spannhülsenelement im verbundenen Zustand von Spannhülsenelement und Basiskörper, insbesondere in einer flächigen Anlage, auf einer, insbesondere äußeren und/oder ringförmigen, Stirnwand des Basiskörpers aufliegt.

Mittels des erfindungsgemäßen Wuchtadapter-Sets wird ein modularer Aufbau realisiert, mittels dem der Wuchtadapter auf einfache Weise an unterschiedliche einzuspannende Werkstücke angepasst werden kann.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

### Es zeigen:

- Fig. 1: in einer perspektivischen Darstellung ein erstes Ausführungsbeispiel eines erfindungsgemäßen Wuchtadapters;
- Fig. 2: eine Schnittdarstellung entlang der Schnittebene A-A aus Fig. 1;
- Fig. 3: in einer Seitenansicht eine Wechsel-Baueinheit des Wuchtadapters;
- Fig. 4: in einer perspektivischen Darstellung ein zweites Ausführungsbeispiel eines erfindungsgemäßen Wuchtadapters;
- Fig. 5: eine Schnittdarstellung entlang der Schnittebene B-B aus Fig. 4;
- Fig. 6: in einer Darstellung gemäß Fig. 5 ein drittes Ausführungsbeispiel eines erfindungsgemäßen Wuchtadapters; und
- Fig. 7: in einer Darstellung gemäß Fig. 6 ein viertes Ausführungsbeispiel eines erfindungsgemäßen Wuchtadapters.

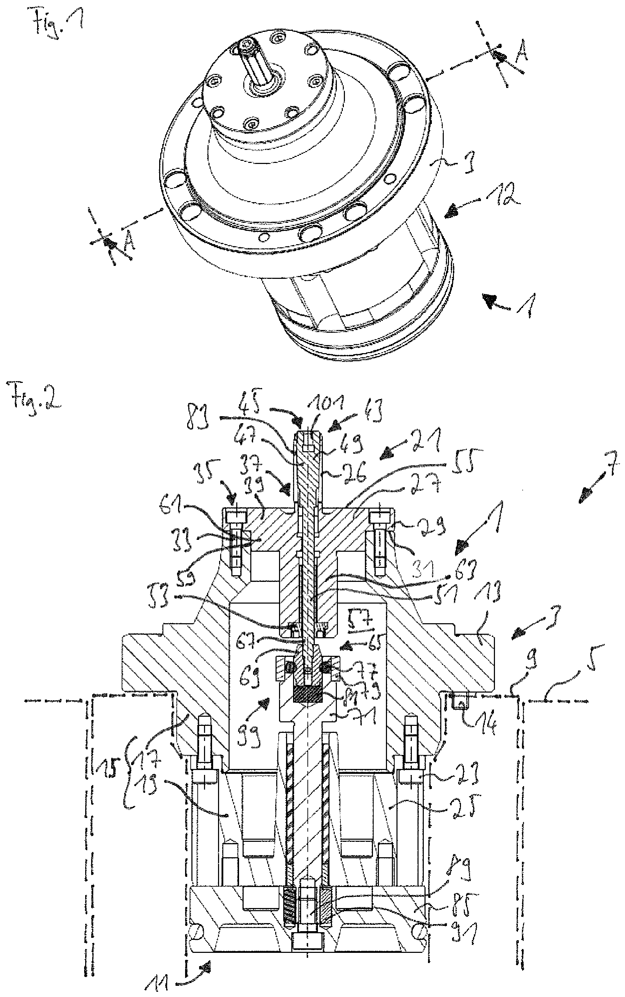

In Fig. 1 ist ein erstes Ausführungsbeispiel eines erfindungsgemäßen Wuchtadapters 1 gezeigt. Der Wuchtadapter 1 weist eine Verbindungseinrichtung 3 auf, mit der der Wuchtadapter 1 mit einer in Fig. 2 mit gestrichelten Linien angedeuteten ortsfesten Basisstation 5 verbunden bzw. an der Basisstation 5 festgelegt werden kann. Der Wuchtadapter 1 bildet zusammen mit der Basisstation 5 eine Wuchtvorrichtung 7 aus, mittels der Werkstücke ausgewuchtet werden können.

Die Basisstation 5 weist eine hier ebenfalls mit gestrichelten Linien angedeutete Antriebsspindel 9 mit einer Wuchtadapter-Aufnahme 11 auf, in der der Wuchtadapter 1 mit einem Aufnahmebereich 12 angeordnet werden kann. Die Antriebsspindel 9 ist Bestandteil einer hier nicht weiter gezeigten Antriebseinrichtung der Basisstation 5 für einen Drehantrieb des Wuchtadapters 1. Zur Befestigung des Wuchtadapters 1 an der Wuchtvorrichtung 7 wird der Wuchtadapter 1 mit dem Aufnahmebereich 12 in die Wuchtadapter-Aufnahme 11 eingeführt, bis ein nach außen abragender Ringflansch 13 der Verbindungseinrichtung 3 auf der Antriebsspindel 9 aufliegt. Anschließend wird der Wuchtadapter 1 mittels mehrerer Verbindungsschrauben 14 mit der Antriebsspindel 9 verschraubt, wobei jede Verbindungsschraube 14 durch eine durchgängige Ausnehmung bzw. Bohrung des Ringflanschs 13 geführt und in eine korrespondierende Gewindebohrung der Antriebsspindel 9 eingeschraubt wird.

Wie aus Fig. 2 weiter hervorgeht, weist der Wuchtadapter 1 einen Basiskörper 15 mit einem hülsenförmigen, hier beispielhaft im Wesentlichen rotationssymmetrischen, Gehäuseteil 17 auf. An dem Gehäuseteil 17 ist der nach außen abragende Ringflansch 13 der Verbindungseinrichtung 3 ausgebildet. Zudem weist der Basiskörper 15 auch eine mit dem Gehäuseteil 17 verbundene Betätigungs-Baueinheit 19 zur Betätigung einer Spanneinrichtung 21 des Wuchtadapters 1 auf. Mittels der Spanneinrichtung 21 kann ein auszuwuchtendes Werkstück an dem Wuchtadapter 1 eingespannt werden. Die Verbindung von Gehäuseteil 17 und Betätigungs-Baueinheit 19 erfolgt hier mittels mehrerer Verbindungsschrauben 23. Dabei ist hier jede Verbindungsschraube 23 durch eine durchgängige Ausnehmung bzw. Bohrung eines Gehäuseteils 25 der Betätigungs-Baueinheit 19 geführt und in eine korrespondierende Gewindebohrung des Gehäuseteils 17 des Basiskörpers 15 eingeschraubt.

Gemäß Fig. 2 ist das Gehäuseteil 17 des Basiskörpers 15 hier zudem lösbar mit einem, eine Spannhülse 26 aufweisenden Spannhülsenelement 27 der Spanneinrichtung 21 verbunden. Hierzu weist das Spannhülsenelement 27 einen nach außen abragenden Ringflansch 29 auf, mit dem das Spannhülsenelement 27 im verbundenen Zustand von Spannhülsenelement 27 und Gehäuseteil 17 in flächiger Anlage auf einer äußeren ringförmigen Stirnwand 31 des Gehäuseteils 17 aufliegt.

Die Verbindung des Spannhülsenelements 27 mit dem Gehäuseteil 17 erfolgt hier beispielhaft mittels mehrerer Verbindungsschrauben 33. Dabei wird hier jede Verbindungsschraube 33 durch eine durchgängige Ausnehmung bzw. Bohrung des Ringflanschs 29 geführt und in eine korrespondierende Gewindebohrung des Gehäuseteils 17 des Basiskörpers 15 eingeschraubt. Die durchgängigen Ausnehmungen des Ringflanschs 29 sind hier beispielhaft gleichmäßig über den Umfang des hier im Wesentlichen rotationssymmetrischen Spannhülsenelements 27 verteilt angeordnet (Fig. 1). Im verbundenen Zustand von Spannhülsenelement 27 und Gehäuseteil 17 sind die an dem Spannhülsenelement 27 anliegenden Schraubenköpfe der Verbindungsschrauben 33 hier zudem versenkt bzw. vollständig in Ausnehmungen bzw. Bohrungen 35 an dem Spannhülsenelement 27 aufgenommen.

Somit wird hier zur Verbindung des Spannhülsenelements 27 mit dem Basiskörper 15 zunächst das Spannhülsenelement 27 auf den Basiskörper 15 aufgesetzt, so dass das Spannhülsenelement 27 mit dem Ringflansch 29 auf der Stirnwand 31 des Gehäuseteils 17 aufliegt. Anschließend werden das Spannhülsenelement 27 und das Gehäuseteil 17 dann mittels der Verbindungsschrauben 33 miteinander verbunden. So kann das Spannhülsenelement 27 auf einfache und robuste Weise mit den Basiskörper 15 verbunden werden. Dabei wird durch diese Art der lösbaren Verbindung von Spannhülsenelement 27 und Basiskörper 5 auch zuverlässig sichergestellt, dass der Wuchtadapter 1 bei einer Verbindung des Basiskörpers 15 mit unterschiedlichen Spannhülsenelementen 27 stets eine hohe Wuchtgüte aufweist. Optional könnte jede Verbindungsschraube 33 noch mit einem Sicherungsring, insbesondere mit einem Sprengring, in der jeweiligen Ausnehmung des Ringflanschs 29 gehaltert sein, dergestalt, dass die Verbindungsschrauben 33 bei einem Lösen der Verbindung von Spannhülsenelement 27 und Gehäuseteil 17 nicht aus den Ausnehmungen entnommen werden oder herausfallen können. So kann eine besonders hohe Wuchtgüte des Wuchtadapters 1 sichergestellt werden.

Alternativ zu den Verbindungsschrauben 33 wäre es beispielsweise aber auch möglich, das Spannhülsenelement 27 und das Gehäuseteil 17 mittels an dem Ringflansch 29 und/oder dem Gehäuseteil 17 angebrachter magnetischer Verbindungselemente oder Rastelemente als Verbindungselemente lösbar miteinander zu verbinden.

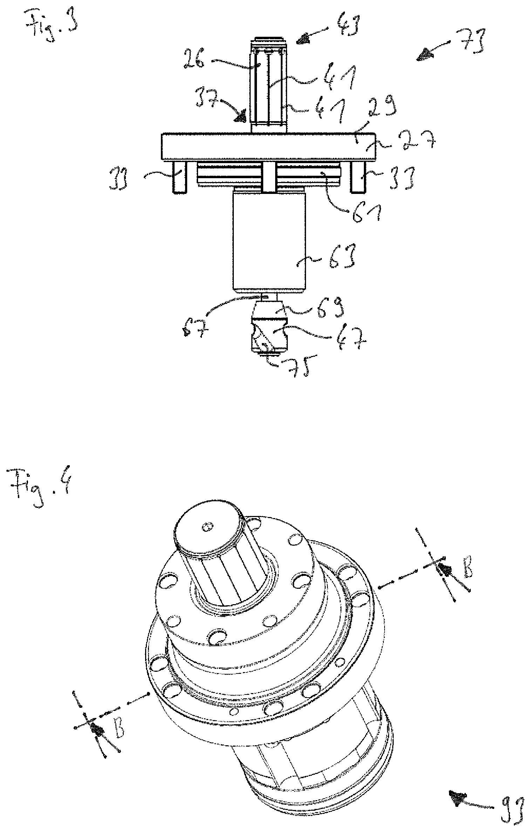

Wie in Fig. 2 weiter gezeigt ist, ist die Spannhülse 26 des Spannhülsenelements 27 mit einem Endbereich 37 mit einem den Ringflansch 29 aufweisenden Basisbereich 39 des Spannhülsenelements 27 verbunden. Dabei sind die Spannhülse 26 und der Basisbereich 39 hier beispielhaft einteilig bzw. einstückig ausgebildet. Zudem weist die Spannhülse 26 hier in einem mittleren Bereich mehrere gleichmäßig über den Hülsenumfang verteilte Schlitze 41 (Fig. 3) auf, mittels denen der Spanndurchmesser der Spannhülse 26 in dem gewünschten Maß verstellt werden kann. An einem freien Ende 43 ist die Spannhülse 26 hier zudem über den gesamten Hülsenumfang geschlossen ausgebildet bzw. nicht geschlitzt. Des Weiteren weist die Spannhülse 26 einen Innenkonus 83 mit sich in Richtung des Basisbereichs 39 verringerndem Querschnitt auf, der sich hier im Wesentlichen über die gesamte Länge der Spannhülse 26 erstreckt.

Gemäß Fig. 2 weist das Spannhülsenelement 27 hier zudem eine durchgängige Ausnehmung 45 auf, in der ein, hier beispielhaft stabförmiges, Spannelement 47 teilweise aufgenommen ist. Die durchgängige Ausnehmung 45 bildet dabei auch den Innenkonus der Spannhülse 26 aus. Das stabförmige Spannelement 47 weist einen Abschnitt 49 mit einem Außenkonus auf, mit dem das Spannelement 47 mit der Spannhülse 26 in Anlage ist oder bringbar ist. Zudem weist das Spannelement 47 auch einen zylinderförmigen Abschnitt 51 auf, mit dem das Spannelement 47, hier beispielhaft unter Zwischenlage einer Kugelführung, linear verlagerbar in der Ausnehmung 45 geführt ist. Die Kugelführung ist hier dabei mittels eines in eine Gewindebohrung des Spannhülsenelements 27 eingeschraubten Halterings 53 verliersicher in der Ausnehmung 45 gehaltert.

Durch Verlagerung des in der Ausnehmung 45 angeordneten Spannelements 47 relativ zu dem Spannhülsenelement 27 nach unten bzw. in Richtung des Gehäuseteils 25 wird die Spannhülse 26 unter Wirkung des Außenkonus des Spannelements 47 und des Innenkonus der Spannhülse 26 nach außen aufgedrückt, so dass sich der Spanndurchmesser der Spannhülse 26 vergrößert. Auf diese Weise kann ein auf einer Ablagefläche 55 des Spannhülsenelements 27 abgelegtes Werkstück von innen eingespannt werden. Die Ablagefläche 55 umgibt die Spannhülse 26 hier außenseitig in Ringform.

Alternativ könnte ein Werkstück zur Einspannung auch auf einem in den Figuren nicht gezeigten, auf der Ablagefläche 55 aufliegenden, insbesondere scheibenförmigen, Adapterelement abgelegt werden.

Zum Lösen eines eingespannten Werkzeugs wird das Spannelements 47 relativ zu dem Spannhülsenelement 27 in entgegengesetzter Richtung bzw. nach oben verlagert, so dass sich der Spanndurchmesser der Spannhülse 26 verringert.

Des Weiteren weist das Spannhülsenelement 27 hier auch eine Zentriereinrichtung zur Zentrierung des Spannhülsenelements 27 relativ zu dem Basiskörper 15 auf. Die Zentriereinrichtung ist hier durch einen in einen Innenraum 57 des Basiskörper-Gehäuseteils 17 einragenden, an einer Innenwand 59 des Gehäuseteils 17 anliegenden Zentriersteg 61 des Basisbereichs 39 des Spannhülsenelements 27 gebildet. Optional könnte zwischen dem Zentriersteg 61 und dem Gehäuseteil 17 noch ein Führungselement, insbesondere eine Kugelführung, angeordnet sein, mit dem das Spannhülsenelement 27 im ausgeschraubten Zustand der Verbindungsschrauben 33 relativ zu dem Gehäuseteil 17 linear verlagerbar geführt ist. Zudem weist der Basisbereich 39 hier auch einen von dem Zentriersteg 61 abragenden, ebenfalls in den Innenraum 57 des Gehäuseteils 17 einragenden Führungsbereich 63 auf, in dem das Spannelement 47 linear verlagerbar geführt ist.

Wie in Fig. 2 weiter gezeigt ist, ragt das stabförmige Spannelement 47 mit einem Endbereich 65 von dem Spannhülsenelement 27 ab. Zudem ist das Spannelement 47 hier zweiteilig ausgebildet. Dabei weist das Spannelement 47 ein stabförmiges Basisteil 67 und ein an dem abragenden Endbereich 65 mit dem Basisteil 67 verbundenes, hülsenförmiges Verbindungsteil 69 auf, das das Basisteil 67 ringförmig umgreift. Mittels des Verbindungsteils 69 kann das Spannelement 47 lösbar mit einem hier beispielhaft stabförmigen Betätigungselement 71 der Betätigungs-Baueinheit 19 verbunden werden. Zur Verbindung mit dem stabförmigen Basisteil 67 weist das hülsenförmige Verbindungsteil 69 ein Innengewinde auf, mit dem das Verbindungsteil 69 auf das, ein korrespondierendes Außengewinde aufweisende Basisteil 67 aufgeschraubt werden kann. Das Spannhülsenelement 27 und das Spannelement 47 bilden hier dabei eine Wechsel-Baueinheit 73 (Fig. 3) aus, die mittels der Verbindungsschrauben 33 lösbar mit dem Basiskörper 15 des Wuchtadapters 1 verbunden werden kann.

Zur lösbaren Verbindung von Spannelement 47 und Betätigungselement 71 kann das Spannelement 47 hier mit dem Betätigungselement 71 verschraubt werden. Hierzu weist das hülsenförmige Verbindungsteil 69 mehrere voneinander beabstandete, bereichsweise wendelförmig über einen Teilumfang des Verbindungsteils 69 verlaufende Rillen 75 (Fig. 3) auf, in die an einem Endbereich 99 des stabförmigen Betätigungselements 71 gehalterte Kugeln 77 als Eingriffselemente konturangepasst eingeführt werden können. Die Kugeln 77 sind in durchgängigen Ausnehmungen als Kugelaufnahmen des Betätigungselements 71 angeordnet, wobei die Kugeln 77 mit einem Teilbereich nach innen in einen Spannelement-Aufnahmeraum des Betätigungselements 71 einragen. Zudem werden die Kugeln 77 mittels eines aufgepressten Halterings 79 (Fig. 2) in den Ausnehmungen gehaltert.

Zur Verschraubung des stabförmigen Spannelements 47 mit dem Betätigungselement 71 weist das Spannelement 47 hier ein stirnseitig angeordnetes Antriebsprofil 101, hier beispielhaft einen Innensechskant, auf. Bei einem Verschrauben des Spannelements 47 mit dem Betätigungselement 71 kommt das Spannelement 47 zudem mit der gegenüberliegenden Stirnseite in Anlage mit einem in dem Spannelement-Aufnahmeraum des Betätigungselements 71 angeordneten, hier beispielhaft aus Gummi gefertigen Federelement 81.

Des Weiteren ist das stabförmige Betätigungselement 71 hier mit dem anderen Endbereich verdrehfest mit einem Kolben 85 der Betätigungs-Baueinheit 19 verbunden. Der Kolben 85 ist Teil einer mit Druckluft betriebenen Zylinder-Kolben-Einheit der Wuchtvorrichtung 7, die eine Antriebseinrichtung bzw. einen Aktuator zur linearen Verlagerung des Betätigungselements 71 und somit auch des damit gekoppelten Spannelements 47 des Wuchtadapters 1 bildet. Die Weiteren Komponenten dieser Antriebseinrichtung sind Bestandteil der Basisstation 5 der Wuchtvorrichtung 7. Zwischen dem Kolben 85 und dem Gehäuseteil 25 der Betätigungs-Baueinheit 19 sind hier zudem in den Figuren nicht gezeigte Druckfedern angeordnet, die eine axiale Vorspannung des Kolbens 85 weg von dem Gehäuseteil 25 nach unten bewirken.

Konkret ist das Betätigungselement 71 hier mittels einer Schraubenverbindung mit dem Kolben 85 verbunden, wobei eine Schraube 89 durch eine axial durchgängige Ausnehmung des Kolbens 85 geführt und in eine stirnseitige Gewindebohrung des Betätigungselements 71 eingeschraubt ist. Der Endbereich des Betätigungselements 71 weist dabei umfangsseitige Ausnehmungen auf, in die zylinderförmige Stifte 91 des Kolbens 85 konturangepasst eingreifen, so dass eine Verdrehung des Betätigungselements 71 relativ zu dem Kolben 85 verhindert ist.

Des Weiteren kann das stabförmige Betätigungselement 71 mittels des Kolbens 85 zwischen einer Ausgangsstellung und einer Endstellung linear verlagert werden. In Fig. 2 ist das Betätigungselement 81 dabei in der Endstellung angeordnet. In der Ausgangsstellung ist das Betätigungselement 85 im Vergleich zur Endstellung nach unten verlagert. Durch Verlagerung des Betätigungselements 71 wird das mit dem Betätigungselement 71 gekoppelte Spannelement 47 mitverlagert und somit das Spannelement 47 relativ zu dem Spannhülsenelement 27 verlagert.

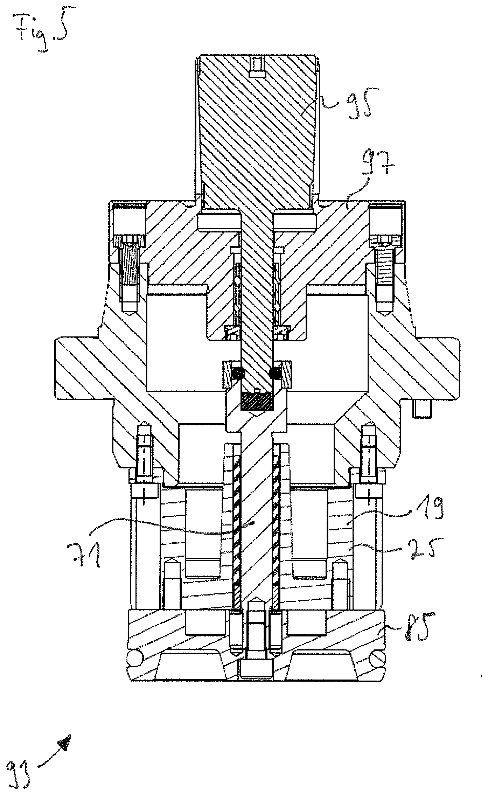

In den Fig. 4 und 5 ist eine zweite Ausführungsform eines erfindungsgemäßen Wuchtadapters 93 gezeigt. Im Vergleich zu dem in den Fig. 1 bis 3 gezeigten Wuchtadapter 1 weist der Wuchtadapter 93 ein Spannelement 95 und ein Spannhülsenelement 97 auf. Das Spannhülsenelement 97 weist eine Spannhülse mit einem im Vergleich zur Spannhülse 26 größeren Hülsendurchmesser auf. Demensprechend weist hier auch der Außenkonus-Abschnitt des stabförmigen Spannelement 95 einen größeren Durchmesser auf. Des Weiteren weist das Spannelement 95 hier kein separates Verbindungsteil zur Verbindung mit dem Betätigungselement 71 auf. Anstelle dessen ist das Spannelement 95 hier einteilig ausgebildet.

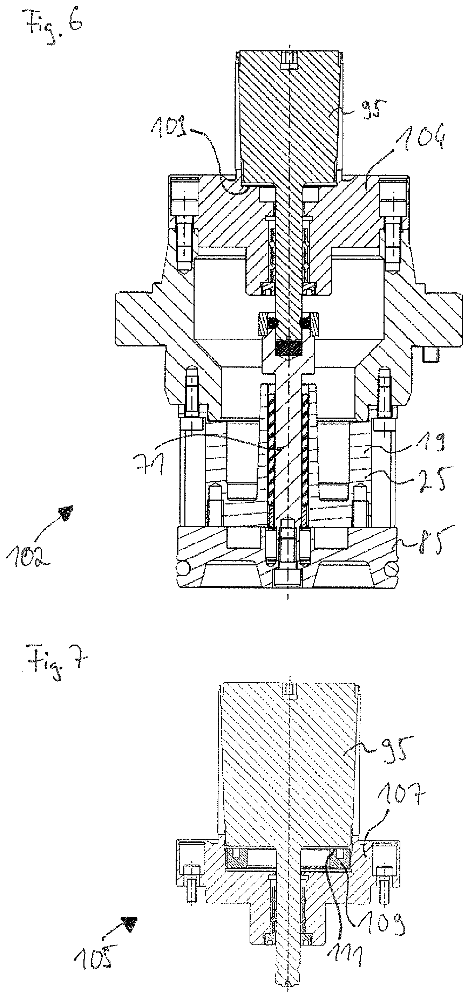

In Fig. 6 ist eine dritte Ausführungsform eines erfindungsgemäßen Wuchtadapters 102 gezeigt. Im Vergleich zu dem in den Fig. 4 und 5 gezeigten Wuchtadapter 93 weist der Wuchtadapter 102 ein Spannhülsenelement 104 auf. Das Spannhülsenelement 104 weist eine Anschlagfläche 103 als Anschlag für das Spannelement 95 auf. Diese Anschlagfläche 103 begrenzt den Spannweg des Spannelements 95 nach unten, so dass einer übermäßigen Aufspreizung der Spannhülse 26 effektiv entgegengewirkt wird. Die Anschlagfläche 103 ist dabei durch eine nach innen ragende Ringschulter des Spannhülsenelements 104 gebildet.

In Fig. 7 ist ein Teil einer vierten Ausführungsform eines erfindungsgemäßen Wuchtadapters 105 gezeigt. Im Vergleich zu dem in den Fig. 4 und 5 gezeigten Wuchtadapter 93 weist der Wuchtadapter 105 ein Spannhülsenelement 107 auf. Das Spannhülsenelement 107 weist einen in eine Gewindebohrung eingeschraubten Anschlagring 109 auf, dessen Stirnfläche hier eine Anschlagfläche 111 für das Spannelement 95 bildet. Der Anschlagring 109 umgreift einen Abschnitt des Spannelements 95 ringförmig und weist hier beispielhaft mehrere in Umfangsrichtung verteilte Ausnehmungen, insbesondere Bohrungen, zur Schraubbetätigung des Spannelements 95 mittels eines geeigneten Betätigungselements auf. Durch weiteres Einschrauben des Anschlagrings 109 in die Gewindebohrung oder durch Ausschrauben des Anschlagrings 109 aus der Gewindebohrung kann dabei die Begrenzung des Spannwegs des Spannelements 95 nach unten bzw. die maximale Aufspreizung der Spannhülse 26 einstellt werden. Dies kann beispielsweise dazu dienen, um den Spanndruck bei druckempfindlichen Werkstücken einzustellen bzw. zu begrenzen. Optional könnte hier zudem noch ein Sicherungselement, insbesondere eine Kontermutter, in die Gewindebohrung eingeschraubt sein, um den Anschlagring 109 zuverlässig in der gewünschten Position zu halten.

**Bezugszeichenliste**

| | | | |
|---|---|---|---|
| 1 | Wuchtadapter | 35 | Ausnehmung |
| 3 | Verbindungseinrichtung | 37 | Endbereich |
| 5 | Basisstation | 39 | Basisbereich |
| 7 | Wuchtvorrichtung | 41 | Schlitz |
| 9 | Antriebsspindel | 43 | Endbereich |
| 11 | Wuchtadapter-Aufnahme | 45 | Ausnehmung |
| 12 | Aufnahmebereich | 47 | Spannelement |
| 13 | Ringflansch | 49 | Abschnitt |
| 14 | Verbindungsschraube | 51 | Abschnitt |
| 15 | Basiskörper | 53 | Haltering |
| 17 | Gehäuseteil | 55 | Ablagefläche |
| 19 | Betätigungs-Baueinheit | 57 | Innenraum |
| 21 | Spanneinrichtung | 59 | Innenwand |
| 23 | Verbindungsschrauben | 61 | Zentriersteg |
| 25 | Gehäuseteil | 63 | Führungsbereich |
| 26 | Spannhülse | 65 | Endbereich |
| 27 | Spannhülsenelement | 67 | Basisteil |
| 29 | Ringflansch | 69 | Verbindungsteil |
| 31 | Stirnwand | 71 | Betätigungselement |
| 33 | Verbindungsschrauben | 73 | Wechsel-Baueinheit |
| 75 | Rille | | |
| 77 | Kugel | | |
| 79 | Haltering | | |
| 81 | Federelement | | |
| 83 | Innenkonus | | |
| 85 | Kolben | | |
| 89 | Schraube | | |
| 91 | Stift | | |
| 93 | Wuchtadapter | | |
| 95 | Spannelement | | |
| 97 | Spannhülsenelement | | |
| 99 | Endbereich | | |
| 101 | Antriebsprofil | | |
| 102 | Wuchtadapter | | |
| 103 | Anschlagfläche | | |
| 104 | Spannhülsenelement | | |
| 105 | Wuchtadapter | | |
| 107 | Spannhülsenelement | | |
| 109 | Anschlagring | | |
| 111 | Anschlagfläche | | |

## Patentansprüche

1. Wuchtadapter für eine Wuchtvorrichtung, mit einer Spanneinrichtung (21) zum Einspannen eines Werkstücks,
wobei die Spanneinrichtung (21) ein Spannhülsenelement (27) mit einer Spannhülse (26) und ein relativ zu dem Spannhülsenelement (27) verlagerbares, insbesondere stabförmiges, Spannelement (47) aufweist,
wobei die Spannhülse (26) einen Konus und das Spannelement (47) einen zu dem Spannhülsen-Konus korrespondierenden Gegenkonus aufweist,
wobei durch Verlagerung des Spannelements (47) relativ zu dem Spannhülsenelement (27) unter Wirkung der Konusse der Spanndurchmesser der Spannhülse (26) verstellbar und somit ein Werkstück mittels der Spannhülse (26) einspannbar ist,
wobei das Spannhülsenelement (27) lösbar mit einem Basiskörper (15) des Wuchtadapters (1) verbindbar ist, **dadurch gekennzeichnet,**
**dass** das Spannhülsenelement (27) zur Verbindung mit dem Basiskörper (15) einen Ringflansch (29) aufweist, mit dem das Spannhülsenelement (27) im verbundenen Zustand von Spannhülsenelement (27) und Basiskörper (15), insbesondere in einer flächigen Anlage, auf einer, insbesondere ringförmigen, Stirnwand (31) des Basiskörpers (15) aufliegt.

2. Wuchtadapter nach Anspruch 1, **dadurch gekennzeichnet, dass** das Spannhülsenelement (27) mittels wenigstens eines Verbindungselements (33), insbesondere mittels mehrerer Verbindungsschrauben, lösbar mit dem Basiskörper (15) verbindbar ist, wobei bevorzugt vorgesehen ist, dass der Ringflansch (29) mehrere durchgängige Ausnehmungen, insbesondere Bohrungen, aufweist, durch die die mehreren Verbindungsschrauben (33) geführt sind.

3. Wuchtadapter nach Anspruch 1 oder 2, **dadurch gekennzeichnet, dass** das Spannhülsenelement (27) eine, insbesondere durchgängige, Ausnehmung (45) aufweist, in der das Spannelement (47) teilweise oder vollständig aufgenommen ist, wobei die Ausnehmung (45) den Spannhülsen-Konus als Innenkonus ausbildet, wobei bevorzugt vorgesehen ist, dass das Spannelement (47) einen zylinderförmigen Abschnitt (51) aufweist, mit dem das Spannelement (47), insbesondere unter Zwischenlage eines Führungselements, linear verlagerbar in der Ausnehmung (45) geführt ist.

4. Wuchtadapter nach einem der vorhergehenden Ansprüche, **dadurch gekennzeichnet, dass** das Spannhülsenelement (27) eine Zentriereinrichtung (61) zur Zentrierung des, insbesondere im Wesentlichen rotationssymmetrischen, Spannhülsenelements (27) relativ zu dem Basiskörper (15) aufweist.

5. Wuchtadapter nach Anspruch 4, **dadurch gekennzeichnet, dass** das Spannhülsenelement (27) als Zentriereinrichtung einen in einen Innenraum (57) des Basiskörpers (15) einragenden, an einer Innenwand (59) des Basiskörpers (15), insbesondere flächig, anliegenden, insbesondere zylinderförmigen, Zentriersteg (61) aufweist.

6. Wuchtadapter nach einem der vorhergehenden Ansprüche, **dadurch gekennzeichnet, dass** das Spannhülsenelement (27) eine die Spannhülse (26) außenseitig umgebende Ablagefläche (55) für ein einzuspannendes Werkstück oder ein, insbesondere scheibenförmiges, Adapterelement aufweist, wobei ein auf der Ablagefläche (55) oder dem Adapterelement abgelegtes Werkstück mittels der Spanneinrichtung (21), insbesondere von innen, einspannbar ist.

7. Wuchtadapter nach einem der vorhergehenden Ansprüche, **dadurch gekennzeichnet, dass** das stabförmige Spannelement an einem Endbereich (65) lösbar mit einem, insbesondere stabförmigen, Betätigungselement (71) zur Verlagerung des Spannelements (47) relativ zu dem Spannhülsenelement (27) verbunden ist.

8. Wuchtadapter nach Anspruch 7, **dadurch gekennzeichnet, dass** das Spannelement (47) an dem Endbereich (65) mit dem Betätigungselement (71) verschraubbar ist, wobei bevorzugt vorgesehen ist, dass das Spannelement (47) an dem Endbereich (65) mehrere voneinander beabstandete, insbesondere wendelförmig, über einen Teilumfang des Spannelements (47) verlaufende Rillen (75) aufweist, in die dem Betätigungselement (71) zugeordnete Eingriffselemente (77), insbesondere Kugeln, einführbar sind.

9. Wuchtadapter nach Anspruch 7 oder 8, **dadurch gekennzeichnet, dass** das stabförmige Spannelement (47) mehrteilig ausgebildet ist, wobei das Spannelement (47) ein stabförmiges Basisteil (67) und ein mit dem Basisteil (67) verbundenes, das Basisteil (67) ringförmig umgreifendes, insbesondere hülsenförmiges, Verbindungsteil (69) zur Verbindung des Spannelements (47) mit dem Betätigungselement (71) aufweist.

10. Wuchtadapter nach einem der vorhergehenden Ansprüche, **dadurch gekennzeichnet, dass** das Spannhülsenelement (27) und das Spannelement (47) eine Wechsel-Baueinheit (73) ausbilden, die lösbar mit dem Basiskörper (15) des Wuchtadapters (1) verbindbar ist.

11. Wuchtadapter nach einem der vorhergehenden Ansprüche, **dadurch gekennzeichnet, dass** der Wuchtadapter (1) einen Teil einer Antriebseinrichtung zur linearen Verlagerung des Spannelements (47) relativ zu dem Spannhülsenelement (27) aufweist, wobei bevorzugt vorgesehen ist, dass der Wuchtadapter (1) einen mittelbar oder unmittelbar mit dem Spannelement (47) gekoppelten Kolben (85) einer Zylinder-Kolben-Einheit als Antriebseinrichtung aufweist.

12. Wuchtadapter nach Anspruch 11, **dadurch gekennzeichnet, dass** der Basiskörper (15) ein, insbesondere hülsenförmiges, die Stirnwand (31) umfassendes Gehäuseteil (17) und eine, insbesondere mittels mehrerer Verbindungsschrauben, mit dem Gehäuseteil (17) verbundene, ein, insbesondere stabförmiges, Betätigungselement (71) zur Verlagerung des Spannelements (27) relativ zu dem Spannhülsenelement (47) und/oder den Teil der Antriebseinrichtung aufweisende Betätigungs-Baueinheit (19) aufweist.

13. Wuchtadapter nach einem der vorhergehenden Ansprüche, **dadurch gekennzeichnet, dass** die Spannhülse (26) zur Verstellung des Spanndurchmessers mit über den Hülsenumfang verteilten Schlitzen (41) versehen ist, wobei bevorzugt vorgesehen ist, dass die Spannhülse (26) an einem freien Endbereich (43) über den gesamten Hülsenumfang geschlossen ausgebildet ist.

14. Wuchtvorrichtung, mit einem Wuchtadapter nach einem der vorhergehenden Ansprüche, wobei bevorzugt vorgesehen ist, dass die Wuchtvorrichtung (7) eine Basisstation (5) mit einer Wuchtadapter-Aufnahme (11) zur Aufnahme des Wuchtadapters (1) aufweist, und dass die Basisstation (5) eine Dreh-Antriebseinrichtung (9) zum Drehantrieb des aufgenommenen Wuchtadapters (1) und/oder zumindest einen Teil einer Antriebseinrichtung zur, insbesondere linearen, Verlagerung des Spannelements (27) relativ zu dem Spannzangenelement (47) aufweist.

15. Wuchtadapter-Set, insbesondere zur Herstellung eines Wuchtadapters nach einem der Ansprüche 1 bis 13, mit mehreren Spannhülsenelementen (27), wenigstens einem zu den Spannhülsenelementen (27) korrespondierenden, insbesondere stabförmigen, Spannelement (47) und einem Basiskörper (15),
wobei jedes Spannhülsenelement (27) eine Spannhülse (26) aufweist und sich die Spannhülsenelemente (27) zumindest in der Ausgestaltung ihrer Spannhülsen (26) unterscheiden,
wobei die Spannhülse (26) jedes Spannhülsenelements (27) einen Konus und das wenigstens eine Spannelement (47) einen zu dem Spannhülsen-Konus korrespondierenden Gegenkonus aufweist, wobei durch Verlagerung des Spannelements (47) relativ zu dem Spannhülsenelement (27) unter Wirkung der Konusse der Spanndurchmesser der jeweiligen Spannhülse (26) verstellbar und somit ein Werkstück einspannbar ist,
wobei jedes Spannhülsenelement (27) lösbar mit dem Basiskörper (15) verbindbar ist,
wobei jedes Spannhülsenelement (27) zur Verbindung mit dem Basiskörper (15) einen Ringflansch (29) aufweist, mit dem das Spannhülsenelement (27) im verbundenen Zustand von Spannhülsenelement (27) und Basiskörper (15), insbesondere in einer flächigen Anlage, auf einer, insbesondere ringförmigen, Stirnwand (31) des Basiskörpers (15) aufliegt.

## Claims

1. Balancing adapter for a balancing device, having a clamping device (21) for clamping a workpiece,
wherein the clamping device (21) has a clamping sleeve element (27) with a clamping sleeve (26), and a clamping element (47), in particular a rod-shaped clamping element, that can be moved relative to the clamping sleeve element (27),
wherein the clamping sleeve (26) has a taper, and the clamping element (47) has a mating taper corresponding to the clamping sleeve taper,
wherein, by action of the tapers, the clamping diameter of the clamping sleeve (26) can be adjusted, and thus a workpiece can be clamped by means of the clamping sleeve (26), by moving the clamping element (47) relative to the clamping sleeve element (27),
wherein the clamping sleeve element (27) is releasably connectable to a base body (15) of the balancing adapter (1), **characterized**
**in that**, for connection to the base body (15), the clamping sleeve element (27) has an annular flange (29) by means of which, in the connected state of the clamping sleeve element (27) and the base body (15), the clamping sleeve element (27) rests, in particular in surface contact, on an end wall (31), in particular an annular end wall, of the base body (15).

2. Balancing adapter according to Claim 1, **characterized in that** the clamping sleeve element (27) is releasably connectable to the base body (15) by means of at least one connecting element (33), in particular by means of a plurality of connecting screws, wherein provision is preferably made for the annular flange (29) to have a plurality of through apertures, in particular holes, through which the plurality of connecting screws (33) are passed.

3. Balancing adapter according to Claim 1 or 2, **characterized in that** the clamping sleeve element (27) has an aperture (45), in particular a through aperture, in which the clamping element (47) is partially or completely accommodated, wherein the aperture (45) forms the clamping sleeve taper as an internal taper, wherein provision is preferably made for the clamping element (47) to have a cylindrical portion (51), by means of which the clamping element (47) is guided in a linearly movable manner in the aperture (45), in particular with the interposition of a guide element.

4. Balancing adapter according to any of the preceding claims, **characterized in that** the clamping sleeve element (27) has a centring device (61) for centring the clamping sleeve element (27), which is, in particular, substantially rotationally symmetrical, relative to the base body (15).

5. Balancing adapter according to Claim 4, **characterized in that** the clamping sleeve element (27) has, as a centring device, a centring web (61), in particular a cylindrical centring web, which projects into an interior space (57) of the base body (15) and rests, in particular in surface contact, against an inner wall (59) of the base body (15).

6. Balancing adapter according to any of the preceding claims, **characterized in that** the clamping sleeve element (27) has a deposition surface (55), which surrounds the clamping sleeve (26) on the outside, for a workpiece to be clamped, or an adapter element, in particular a disc-shaped adapter element, wherein a workpiece deposited on the deposition surface (55) or the adapter element can be clamped, in particular from the inside, by means of the clamping device (21).

7. Balancing adapter according to any of the preceding claims, **characterized in that** the rod-shaped clamping element is connected releasably in an end region (65) to an actuating element (71), in particular a rod-shaped actuating element, for moving the clamping element (47) relative to the clamping sleeve element (27).

8. Balancing adapter according to Claim 7, **characterized in that** the clamping element (47) can be screwed in the end region (65) to the actuating element (71), wherein provision is preferably made for the clamping element (47) to have, in the end region (65), a plurality of mutually spaced grooves (75) which extend over a partial circumference of the clamping element (47), in particular helically, and into which engagement elements (77), in particular balls, associated with the actuating element (71) can be introduced.

9. Balancing adapter according to Claim 7 or 8, **characterized in that** the rod-shaped clamping element (47) is of multi-part design, wherein the clamping element (47) has a rod-shaped base part (67) and a connecting part (69), in particular a sleeve-shaped connecting part, which is connected to the base part (67) and surrounds the base part (67) in a ring shape, for connecting the clamping element (47) to the actuating element (71).

10. Balancing adapter according to any of the preceding claims, **characterized in that** the clamping sleeve element (27) and the clamping element (47) form an interchangeable module (73), which is releasably connectable to the base body (15) of the balancing adapter (1).

11. Balancing adapter according to any of the preceding claims, **characterized in that** the balancing adapter (1) has a part of a driving device for the linear movement of the clamping element (47) relative to the clamping sleeve element (27), wherein provision is preferably made for the balancing adapter (1) to have a piston (85) of a piston-cylinder unit as a driving device, said piston being coupled directly or indirectly to the clamping element (47).

12. Balancing adapter according to Claim 11, **characterized in that** the base body (15) has a housing part (17), in particular a sleeve-shaped housing part, which comprises the end wall (31), and an actuating module (19), which is connected to the housing part (17), in particular by means of a plurality of connecting screws, and has an actuating element (71), in particular a rod-shaped actuating element, for moving the clamping element (27) relative to the clamping sleeve element (47) and/or the part of the driving device.

13. Balancing adapter according to any of the preceding claims, **characterized in that** the clamping sleeve (26) is provided with slots (41) distributed over the sleeve circumference for adjusting the clamping diameter, wherein provision is preferably made for the clamping sleeve (26) to be of closed design over the entire sleeve circumference in a free end region (43).

14. Balancing device, having a balancing adapter according to any of the preceding claims, wherein provision is preferably made for the balancing device (7) to have a base station (5) with a balancing adapter receptacle (11) for receiving the balancing adapter (1), and for the base station (5) to have a rotary driving device (9) for the rotary driving of the balancing adapter (1) received and/or to have at least one part of a driving device for the movement, in particular linear movement, of the clamping element (27) relative to the collet element (47).

15. Balancing adapter set, in particular for the production of a balancing adapter according to any of Claims 1 to 13, having a plurality of clamping sleeve elements (27), at least one clamping element (47), in particular rod-shaped clamping element, corresponding to the clamping sleeve elements (27), and a base body (15), wherein each clamping sleeve element (27) has a clamping sleeve (26), and the clamping sleeve elements (27) differ from one another, at least in the configuration of their clamping sleeves (26),
wherein the clamping sleeve (26) of each clamping sleeve element (27) has a taper, and the at least one clamping element (47) has a mating taper corresponding to the clamping sleeve taper, wherein, by action of the tapers, the clamping diameter of the respective clamping sleeve (26) can be adjusted, and thus a workpiece can be clamped, by moving the clamping element (47) relative to the clamping sleeve element (27),
wherein each clamping sleeve element (27) is releasably connectable to the base body (15),
wherein, for connection to the base body (15), each clamping sleeve element (27) has an annular flange (29) by means of which, in the connected state of the clamping sleeve element (27) and the base body (15), the clamping sleeve element (27) rests, in particular in surface contact, on an end wall (31), in particular an annular end wall, of the base body (15).

## Revendications

1. Adaptateur d'équilibrage pour un dispositif d'équilibrage, avec un système de serrage (21) pour serrer une pièce,
le système de serrage (21) comportant un élément de douille de serrage (27) avec une douille de serrage (26) et un élément de serrage (47), en particulier en forme de barre, pouvant être déplacé par rapport à l'élément de douille de serrage (27),
la douille de serrage (26) comportant un cône et l'élément de serrage (47) comportant un contre-cône correspondant au cône de douille de serrage,
le déplacement de l'élément de serrage (47) par rapport à l'élément de douille de serrage (27) permettant sous l'action des cônes d'ajuster le diamètre de serrage de la douille de serrage (26) et ainsi de serrer une pièce au moyen de la douille de serrage (26),
l'élément de douille de serrage (27) pouvant être relié de manière amovible à un corps de base (15) de l'adaptateur d'équilibrage (1), **caractérisé en ce que** l'élément de douille de serrage (27) comporte, pour la liaison au corps de base (15), une bride annulaire (29) par laquelle l'élément de douille de serrage (27) repose, dans l'état relié de l'élément de douille de serrage (27) et du corps de base (15), en particulier en appui à plat, sur une paroi frontale (31), en particulier annulaire, du corps de base (15).

2. Adaptateur d'équilibrage selon la revendication 1, **caractérisé en ce que** l'élément de douille de serrage (27) peut être relié de manière amovible au corps de base (15) au moyen d'au moins un élément de liaison (33), en particulier au moyen de plusieurs vis de liaison, le fait que la bride annulaire (29) comporte de préférence plusieurs évidements continus, en particulier des alésages, à travers lesquels les plusieurs vis de liaison (33) sont guidées, étant de manière préférée prévu.

3. Adaptateur d'équilibrage selon la revendication 1 ou 2, **caractérisé en ce que** l'élément de douille de serrage (27) comporte un évidement (45), en particulier continu, dans lequel l'élément de serrage (47) est reçu en partie ou complètement, l'évidement (45) formant le cône de douille de serrage en tant que cône intérieur, le fait que l'élément de serrage (47) comporte une section cylindrique (51) avec laquelle l'élément de serrage (47) est guidé dans l'évidement (45) de manière à pouvoir être déplacé linéairement avec interposition d'un élément de guidage étant de manière préférée prévu.

4. Adaptateur d'équilibrage selon l'une des revendications précédentes, **caractérisé en ce que** l'élément de douille de serrage (27) comporte un système de centrage (61) pour centrer l'élément de douille de serrage (27), en particulier sensiblement symétrique en rotation, par rapport au corps de base (15).

5. Adaptateur d'équilibrage selon la revendication 4, **caractérisé en ce que** l'élément de douille de serrage (27) comporte comme système de centrage une nervure de centrage (61), en particulier cylindrique, dépassant dans un espace intérieur (57) du corps de base (15) et reposant, en particulier à plat, sur une paroi intérieure (59) du corps de base (15).

6. Adaptateur d'équilibrage selon l'une des revendications précédentes, **caractérisé en ce que** l'élément de douille de serrage (27) comporte une surface de pose (55) entourant côté extérieur la douille de serrage (26) pour une pièce à serrer ou un élément adaptateur, en particulier en forme de disque, une pièce posée sur la surface de pose (55) ou sur l'élément adaptateur pouvant être serrée, en particulier depuis l'intérieur, au moyen du système de serrage (21).

7. Adaptateur d'équilibrage selon l'une des revendications précédentes, **caractérisé en ce que** l'élément de serrage en forme de barre est relié de manière amovible, sur une zone d'extrémité (65), à un élément d'actionnement (71), en particulier en forme de barre, pour déplacer l'élément de serrage (47) par rapport à l'élément de douille de serrage (27).

8. Adaptateur d'équilibrage selon la revendication 7, **caractérisé en ce que** l'élément de serrage (47) peut être vissé à l'élément d'actionnement (71) sur la zone d'extrémité (65), le fait que l'élément de serrage (47) comporte, sur la zone d'extrémité (65), plusieurs rainures (75) espacées les unes des autres, s'étendant, en particulier avec une forme hélicoïdale, sur une périphérie partielle de l'élément de serrage (47), dans lesquelles peuvent être introduits des éléments de prise (77), en particulier des billes, associés à l'élément d'actionnement (71), étant de manière préférée prévu.

9. Adaptateur d'équilibrage selon la revendication 7 ou 8, **caractérisé en ce que** l'élément de serrage (47) en forme de barre est formé en plusieurs parties, l'élément de serrage (47) comportant une partie de base (67) en forme de barre et une partie de liaison (69), en particulier en forme de douille, reliée à la partie de base (67), entourant avec une forme annulaire la partie de base (67) pour relier l'élément de serrage (47) à l'élément d'actionnement (71).

10. Adaptateur d'équilibrage selon l'une des revendications précédentes, **caractérisé en ce que** l'élément de douille de serrage (27) et l'élément de serrage (47) forment une unité modulaire interchangeable (73) qui peut être reliée de manière amovible au corps de base (15) de l'adaptateur d'équilibrage (1).

11. Adaptateur d'équilibrage selon l'une des revendications précédentes, **caractérisé en ce que** l'adaptateur d'équilibrage (1) comporte une partie d'un système d'entraînement pour le déplacement linéaire de l'élément de serrage (47) par rapport à l'élément de douille de serrage (27), le fait que l'adaptateur d'équilibrage (1) comporte comme système d'entraînement un piston (85) couplé indirectement ou directement à l'élément de serrage (47) d'une unité cylindre-piston étant de manière préférée prévu.

12. Adaptateur d'équilibrage selon la revendication 11, **caractérisé en ce que** le corps de base (15) comporte une partie de boîtier (17), en particulier en forme de douille, comprenant la paroi frontale (31) et une unité modulaire d'actionnement (19) reliée à la partie de boîtier (17), en particulier au moyen de plusieurs vis de liaison, comportant un élément d'actionnement (71), en particulier en forme de barre, pour déplacer l'élément de serrage (27) par rapport à l'élément de douille de serrage (47) et/ou à la partie du système d'entraînement.

13. Adaptateur d'équilibrage selon l'une des revendications précédentes, **caractérisé en ce que** la douille de serrage (26) est pourvue de fentes (41) réparties sur la périphérie de douille pour ajuster le diamètre de serrage, le fait que la douille de serrage (26) est de préférence fermée sur une zone d'extrémité libre (43) sur toute la périphérie de douille étant de manière préférée prévu.

14. Dispositif d'équilibrage avec un adaptateur d'équilibrage selon l'une des revendications précédentes, le fait que le dispositif d'équilibrage (7) comporte une station de base (5) avec un logement (11) d'adaptateur d'équilibrage pour recevoir l'adaptateur d'équilibrage (1) et que la station de base (5) comporte un système d'entraînement en rotation (9) pour l'entraînement en rotation de l'adaptateur d'équilibrage (1) reçu et/ou au moins une partie d'un système d'entraînement pour le déplacement, en particulier linéaire, de l'élément de serrage (27) par rapport à l'élément de pince de serrage (47) étant de manière préférée prévu.

15. Ensemble d'adaptateurs d'équilibrage, en particulier pour la fabrication d'un adaptateur d'équilibrage selon l'une des revendications 1 à 13, avec plusieurs éléments de douille de serrage (27), au moins un élément de serrage (47), en particulier en forme de barre, correspondant aux éléments de douille de serrage (27) et un corps de base (15),
chaque élément de douille de serrage (27) comportant une douille de serrage (26) et les éléments de douille de serrage (27) différant au moins dans la configuration de leurs douilles de serrage (26),
la douille de serrage (26) de chaque élément de douille de serrage (27) comportant un cône et l'au moins un élément de serrage (47) comportant un contre-cône correspondant au cône de douille de serrage, le diamètre de serrage de la douille de serrage (26) respective pouvant être ajusté par déplacement de l'élément de serrage (47) par rapport à l'élément de douille de serrage (27) sous l'action des cônes et ainsi une pièce pouvant être serrée,
chaque élément de douille de serrage (27) pouvant être relié de manière amovible au corps de base (15),
chaque élément de douille de serrage (27) comportant, pour la liaison au corps de base (15), une bride annulaire (29), avec laquelle l'élément de douille de serrage (27) repose, dans l'état relié de l'élément de douille de serrage (27) et du corps de base (15), en particulier en appui à plat, sur une paroi frontale (31), en particulier annulaire, du corps de base (15).
